# EUROPÄISCHE PATENTANMELDUNG

(11) **EP 0 915 554 A2**
(43) Veröffentlichungstag der Anmeldung: **12.05.1999**
(21) Anmeldenummer: 98120250.0
(22) Anmeldetag: 26.10.1998
(51) Int. Cl.: H02K 1/20, H02K 9/19, H02K 5/20

(54) **Elektromotor**

(30) Priorität: 06.11.1997 DE 19749108
(71) Anmelder: SIEMENS AKTIENGESELLSCHAFT, 80333 München (DE)
(72) Erfinder: Sopp, Helmut, 97650 Fladungen (DE)

(57) **Zusammenfassung**

Die Erfindung betrifft einen Elektromotor mit Kühlung, der folgende Merkmale aufweist.

Einen gehäuselosen Stator, dessen Blechpaket (1) vorzugsweise eine rotationssymmetrische Kontur hat, Kühlnuten (2), die sich auf der den Nuten abgewandten Seite des Statorblechs (1) befinden, aus dem Statorblechpaket (1) axial ragende Wickelköpfe (6), mit Kühlmedium durchsetzte Kühlrohre (3), die in den Kühlnuten (2) angeordnet sind und mit dem Ständerblechpaket (1) und den Wickelköpfen (6) durch einen wärmeleitenden Kunststoffverguß (1) verbunden sind.

## Beschreibung

Die Erfindung betrifft einen Elektromotor mit Kühlung mit einem gehäuselosen Stator mit Nuten, dessen Statorblechpaket vorzugsweise eine rotationssymmetrische Kontur hat, von Kühlmedium durchsetzten Kühlrohren, die sich auf der den Nuten abgewandten Seiten im Stator befinden, und aus dem Statorblechpaket axial ragende Wickelköpfe.

Aus der CH 317,647 ist eine elektrische Maschine bekannt, deren Statorblechpaket auf dem Rückenteil oberflächenvergrößernde Vorsprünge aufweist. Es sind außerdem die Wickelköpfe mit Gießharz umgossen. Nachteilig dabei ist, daß diese Maschine luftgekühlt ist und damit sehr schnell an die Grenzen ihrer Ausnutzung stößt.

Aus der DE 7,108,091 ist außerdem eine gehäuselose elektrische Maschine bekannt, die an das Statorblechpaket angestanzte Kühlrippen aufweist. Dabei tritt bei Luftkühlung ein ebenfalls ungenügender Wärmefluß vom Aktivteil zum Kühlmedium auf. Außerdem ist es bekannt, elektrische Maschinen mit einem flüssigkeitsdurchströmten Kühlmantel zu umgeben, dessen z.B. in Lagerschilde eingebaute Umlenkmechanismen aufwendige Abdichtungsmaßnahmen erfordern.

Die DE 37 08 804 A1 beschreibt in eine Vergußmasse eingegossene Ringkerntransformatoren mit einem mittig angeordneten Kühlrohr, dabei ist die beschriebene Kühlung offensichtlich für Luft ausgelegt.

Aus der DE 41 07 399 A1 ist ein Elektromotor bekannt, dessen Stator mit Ausnehmungen zur Führung eines Kühlmittels versehen ist. Nachteilig dabei ist der ungenügende Wärmeübergang der aktiven Teile des Elektromotors zum Kühlmedium. Außerdem ist eine Montage dieses Elektromotors aufgrund seiner konstruktiven Merkmale äußerst aufwendig.

Ausgehend davon, ist die Aufgabe der Erfindung eine elektrische Maschine zu schaffen, die den Herstellungsaufwand begrenzt, sowohl für Flüssigkeits- als auch Luftkühlung geeignet ist, und die außerdem für Wickelköpfe eine besondere Kühlung vorsieht.

Die Lösung der gestellten Aufgabe gelingt dadurch, daß die Kühlrohre in Kühlnuten angeordnet sind und mit Statorblechpaket und den Wickelköpfen durch einen wärmeleitenden Kunststoffverguß verbunden sind.

Durch diese Anordnung steht der Wickelkopfbereich, der auf den Stirnseiten der Statorblechpakete axial hervorsteht, in wärmeleitenden Kontakt mit dem Kühlmedium.

Durch die Anordnung von ein- oder mehrgängigen Kühlrohren in Nuten des Blechpakets, die durch bekannte form-, reib- oder stoffschlüssige Verbindungsarten mit dem Blechpaket befestigbar sind, wird die Wärme direkt vom Entstehungsort abgeführt, ohne mehrere Wärmeübergangsstellen zu passieren. Das Einlegen der Kühlrohre in die Nuten erfolgt bei einem Innenläufermotor von außen, bei einem Außenläufermotor von innen. Durch Verwendung von ein- oder mehrgängigen Kühlrohren können unterschiedliche Kühlmedien in eigenständigen Kühlkreisläufen verwendet werden.

In einer Weiterbildung der elektrischen Maschine verlaufen die Kühlnuten schräg oder axial zur Motorachse. Dadurch können konstruktionsbedingte Eigenheiten, wie z.B. Schrägung der Statornuten zur Reduzierung des Rastmoments berücksichtigt werden. Das der Nut zugeordnete Kühlrohr verläuft parallel radial nach außen versetzt zu der in der Nut befindlichen elektrischen Wicklungsanordnung.

In einer weiteren Ausbildung der elektrischen Maschine werden die Kühlrohre mäanderförmig in die Kühlnuten eingelegt, so daß sich Anfang und Ende einer Kühlrohranordnung an einer Stirnseite des Statorblechpaketes befinden. Dadurch kann der Motor bei voller Zugängiglichkeit des Kühlkreislaufes in eine zylindrische Aufnahme montiert werden.

Durch die weitere Ausgestaltung der Kühlrohranordnung derart, daß sich die Mäander radial über den Wickelköpfen befinden, kann die Wärme in diesem Bereich verstärkt abgeführt werden und trägt somit entscheidend zu einer besseren Ausnutzung der elektrischen Maschine bei.

Dadurch, daß außerhalb der Bohrung das ganze Statorblechpaket einschließlich der Wickelköpfe vergossen wird, kann der Aussendurchmesser des vergossenen Statorblechpakets spanend nachbearbeitet werden, so daß gemäß einer weiteren Ausgestaltung der Einbau in eine zylindrische Aufnahme durchführbar ist. Die Motoren können deshalb nahezu unabhängig von ihren weiteren Einbauort hergestellt werden. Anpassungen an evtl. spätere Gehäuseformen erfolgen durch eine spanende Nachbearbeitung des Kunststoffes am Außenumfang des Statorblechpaketes, wie z.B. Drehen oder Fräsen. Die anschließende Montage des bearbeiteten Statorblechpaketes kann dabei durch allgemeine bekannte Verbindungsarten, wie Reib- , Form oder Stoffschluß, erfolgen. Als zylindrische Aufnahme eignet sich z.B. ein Spindelkasten.

In einer weiteren Ausgestaltung der Erfindung kann der Elektromotor sowohl als Innen- als auch als Außenläufermotor eingesetzt werden, z.B. für Seilwinden.

Die Erfindung wird anhand eines Ausführungsbeispiels näher erläutert. Es zeigen:
- FIG 1: einen Längsschnitt eines Statorblechpakets,
- FIG 2: einen Querschnitt eines Statorblechpakets,
- FIG 3: eine Seitenansicht eines Statorblechpakets oh ne Wickelkopfverguß.

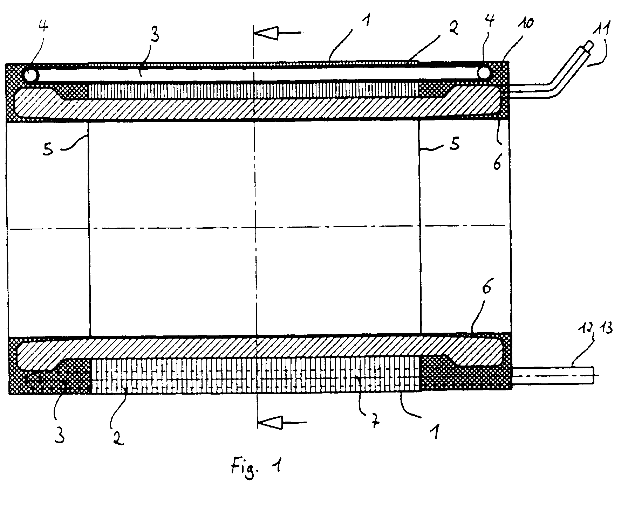

FIG 1 zeigt einen Längsschnitt eines Statorblechpakets 1 mit an der Außenkontur befindlichen Nuten 2, in der sich Kühlrohre 3 befinden. Das Statorblechpaket 1 kann dabei geschweißt, geklammert, stanzpaketisiert , lasergeschweißt oder verklebt sein. Die an der Außenkontur des Statorblechpakets 1 befindlichen Nuten 2 werden zusammen mit den einen Luftspalt zugewandten Nuten hergestellt. Die axial außerhalb des Statorblechpakets 1 befindlichen Mäander 4 der Kühlrohre 3 sind zusammen mit axial aus den Stirnseiten 5 des Statorblechpakets 1 ragenden Wickelköpfen 6 vergossen. Die Tiefe 7 der an der Außenkontur befindlichen Nuten 2 ist großer oder gleich dem Durchmessers den Kühlrohre 3. Dadurch wird bei einer spanenden Nachbearbeitung der Kunststoffvergußmasse 10, z.B. Gießharz, eine Beschädigung der Kühlrohre 3 vermieden. Die elektrischen Anschlüsse 11, als auch der Ein- 12 und Ausgang 13 des Kühlmediums befinden sich auf der gleichen Stirnseite 5 des Statorblechpaketes 1. Eine leicht konische Anformung der Kunststoffvergußmasse 10 am Innenradius des Statorblechpakets 1 im Bereich des Wickelkopfes 6 erleichtert die Montage eines nicht näher dargestellten Rotors der als Reluktanzrotor, dauermagneterregter Rotor oder Rotor mit eigener Erregung ausgebildet sein kann.

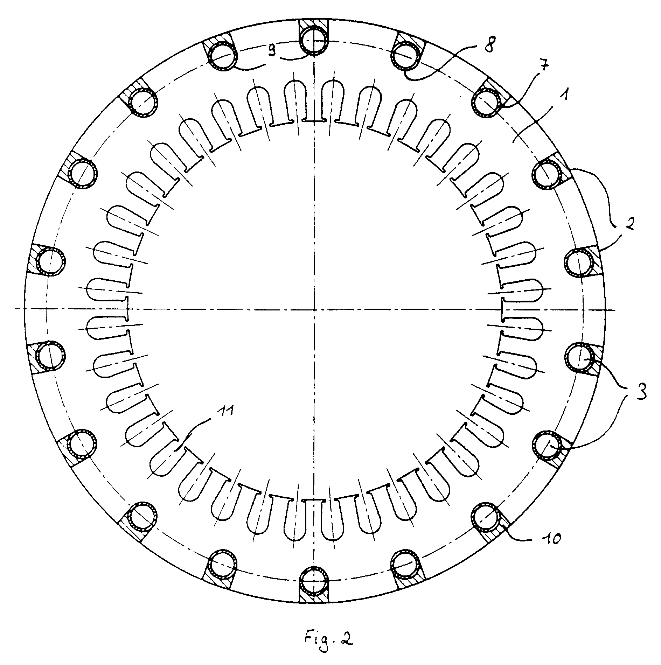

FIG 2 zeigt im Querschnitt das Statorblechpaket 1. Die an der Außenkontur des Statorblechpakets 1 gleichmäßig verteilten Nuten 2 sind mit Kühlrohren 3 besetzt. Der Nutboden 8 ist in axialer Richtung halbkreisförmig 9 ausgebildet, um ergänzend zur wärmeleitenden Kunststoffvergußmasse 10 einen weiteren Wärmefluß in Richtung des Kühlmediums zu erhalten. Die Außenkontur des Statorblechpakets 1 wurde derart abgedreht, daß sich die Kunststoffvergußmasse 10 nur noch als Füll- und Fixiermaterial in den Nuten 2 befindet. Nutgestaltungen 14 am Innenradius des Statorblechpaketes 1 zur Aufnahme der Wicklungen spielen eine untergeordnete Rolle, da der Wärmetransport aus dem Statorblechpaket 1 entscheidend ist. Die Kühlrohre 3 können aus Metall oder wärmeleitenden Kunststoff bestehen.

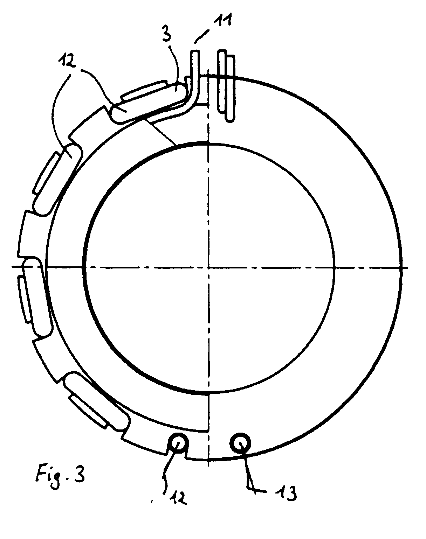

FIG 3 zeigt in Seitenansicht das Statorblechpaket 1 ohne Kunststoffvergußmasse 10. Zusammen mit FIG 1 sieht man, daß über den Wickelköpfen 6 Mäander 4 der Kühlrohre 3 angeordnet sind. Außerdem sind die Kühlmitteleingänge 12 und -ausgänge 13 als auch die elektrischen Anschlüsse 11 einer nicht näher dargestellten Wicklung zu erkennen.

Dieses Ausführungsbeispiel zeigt summarisch die Vorteile dieser Erfindung. Durch das gehäuselose Statorblechpaket wird die erzeugte Wärme unmittelbar am Entstehungsort durch kreisende Kühlmedien in Kühlrohren 3, z.B. Luft und/oder Wasser, abgeführt. Es sind somit keine aufwendigen Abdichtungen im Bereich des Statorblechpaketes 1 oder in nicht näher dargestellten Lagerschilden notwendig. Durch den damit verbundenen Wegfall von Gehäuse, Kühlmantel und Abdichtungen wird ein geringes Bauvolumen und eine kostengünstige Herstellung dieses Elektromotors erreicht.

## Patentansprüche

1. Elektromotor mit Kühlung mit:
einem gehäuselosen Stator mit Nuten (11), dessen Statorblechpaket (1) vorzugsweise eine rotationssymmetrische Kontur hat, von Kühlmedium durchsetzten Kühlrohren (3), die sich auf der den Nuten (11) abgewandten Seiten im Stator befinden, und aus dem Statorblechpaket (1) axial ragenden Wickelköpfen (6),
**dadurch gekennzeichnet,** daß die Kühlrohre (3) in Kühlnuten (2) angeordnet sind und mit Statorblechpaket (1) und den Wickelköpfen (6) durch einen wärmeleitenden Kunststoffverguß (10) verbunden sind.

2. Elektromotor nach Anspruch 1, **dadurch gekennzeichnet,** daß die Kühlnuten axial verlaufen.

3. Elektromotor nach Anspruch 1, **dadurch gekennzeichnet,** daß die Kühlnuten (2) schräg zur Motorachse verlaufen.

4. Elektromotor nach einem der vorhergehenden Ansprüche, **dadurch gekennzeichnet,** daß die Kühlrohre (3) mäanderförmig angeordnet sind, wobei sich Anfang und Ende einer Kühlrohranordnung an einer Stirnseite des Statorblechpaketes (1) befinden.

5. Elektromotor nach Anspruch 4, **dadurch gekennzeichnet,** daß die Mäander sich im wesentlichen radial über den Wickelköpfen (6) befinden.

6. Elektromotor nach einem der vorhergehenden Ansprüche, **dadurch gekennzeichnet,** daß der Außendurchmesser des vergossenen Ständerblechpaketes (1) spanend bearbeitbar ist.

7. Elektromotor nach Anspruch 6, **dadurch gekennzeichnet,** daß der Elektromotor form-, kraft-, oder reibschlüssig in eine zylindrische Aufnahme montierbar ist.

8. Elektromotor nach einem der vorhergehenden Ansprüche, **dadurch gekennzeichnet,** daß es sich um einen Innen- oder Außenläufermotor handelt.
